# EUROPÄISCHE PATENTSCHRIFT

(11) **EP 1 851 269 B1**
(45) Veröffentlichungstag und Bekanntmachung des Hinweises auf die Patenterteilung: **09.06.2010**
(21) Anmeldenummer: 06708084.6
(22) Anmeldetag: 08.02.2006
(51) Int. Cl.: C08K 3/30, C08K 5/04, C08L 39/06

(54) **VERFAHREN ZUR STABILISIERUNG VON POLYVINYLPYRROLIDONEN**
METHOD FOR THE STABILIZATION OF POLYVINYLPYRROLIDONES
PROCEDE POUR LA STABILISATION DE POLYVINYLPYRROLIDONES

(30) Priorität: 09.02.2005 DE 102005005974
(43) Veröffentlichungstag der Anmeldung: 07.11.2007
(73) Patentinhaber: BASF SE, 67056 Ludwigshafen (DE)
(72) Erfinder: KOLTER, Karl, 67117 Limburgerhof (DE); GARCIA CASTRO, Ivette, 67067 Ludwigshafen (DE); PINNEKER, Olga, 67258 Hessheim (DE); WIDMAIER, Ralf, 68167 Mannheim (DE); STRUBE, Karl-Hermann, 67346 Speyer (DE); FUSSNEGGER, Bernhard, 67489 Kirrweiler (DE); KROLL, Manfred, 67063 Ludwigshafen (DE); HÖFER, Frank, 67098 Bad Dürkheim (DE); ASCHERL, Hermann, 67246 Dirmstein (DE); SCHMIDT, Peter, 67273 Weisenheim (DE)
(86) Internationale Anmeldenummer: PCT/EP2006/050737
(87) Internationale Veröffentlichungsnummer: WO 2006/084851

(56) Entgegenhaltungen:
- EP-B- 1 083 884
- WO-A-96/18673
- US-B1- 6 331 333

## Beschreibung

Die vorliegende Erfindung betrifft ein Verfahren zur Herstellung von gegen Peroxid-Bildung stabilisierten Polyvinylpyrrolidonen.

Polyvinylpyrrolidone wie Homo- und Copolymere des N-Vinylpyrrolidons werden üblicherweise nach ihrer Polymerisation durch Sprühtrocknung oder Walzentrocknung oder einer anderen Warmlufttrocknung in rieselfähige Pulver überführt. Bei diesen Prozessen bilden sich durch den intensiven Luftkontakt und die Wärme Spuren von Peroxiden, deren Gehalt im Laufe der darauffolgenden Verpackung und Lagerung noch weiter zunimmt. Diese Neigung zur Peroxidbildung kann bei der Verwendung von Polyvinylpyrrolidonen in pharmazeutischen Zubereitungen Probleme bereiten. In den gültigen Pharmakopöen, z.B. Ph. Eur. 3 und JP XIII, ist der Peroxidgehalt für diese Polymere auf maximal 400 ppm limitiert. Durch Trocknung unter Luftausschluss, Lagerung bei tiefen Temperaturen oder die hermetisch dichte Verpackung unter Vakuum oder einem Inertgas kann zwar die Kinetik der Peroxidbildung verlangsamt, nicht aber verhindert werden. Auch durch Behandlung bei höheren Temperaturen und/oder leicht alkalischem pH kann der Peroxidgehalt zunächst abgesenkt werden. Allerdings ist diese Absenkung nur kurzfristiger Natur, der Peroxidgehalt steigt danach schnell wieder an. Ferner sind diese Verfahren mit einem sehr hohen Aufwand verbunden, so dass die Akzeptanz durch die Verwender gering ist.

In der EP-B 873 130 wird empfohlen, Polyvinylpyrrolidone zur Verhinderung der Peroxid-Bildung unter einer Stickstoffatmosphäre sprühzutrocknen und in luftdichten Behältern aufzubewahren.

Die Verwendung von Antioxidantien wie beispielsweise phenolischen Antioxidantien, Ascorbinsäure, Ethoxyquin, Butylhydroxytoluol, Tocopherol oder Nordihydroguarajetsäure zur Verhinderung von unerwünschten oxidativen Prozessen ist allgemein bekannt. Ebenso ist bekannt, dass phenolische Antioxidantien sich aufgrund ihrer mangelnden biologischen Abbaubarkeit nur eingeschränkt eignen (vgl. Römpp-ChemieLexikon, 9. Auflage, Georg Thieme Verlag, Stuttgart,1992).

Aus der US 6,331,333 ist bekannt, dass Polyvinylpyrrolidone zur Verhinderung der Peroxid-Bildung bei Lagerung in sauerstoffundurchlässigen Verpackungen in Gegenwart eines Sauerstofffängers gelagert werden. Als Sauerstofffänger werden Ascorbinsäure, Eisenpulver oder Eisensalze verwendet. Sauerstofffänger und Polyvinylpyrrolidon sind dabei räumlich getrennt.

Aus der US 6,498,231 ist bekannt, dass Polyvinylpyrroldione zur Stabilisierung bei Lagerung mit einem Antioxidans vermischt und unter einer Atmosphäre, die nicht mehr als 50.000 ppm Sauerstoff enthält, gelagert werden. Als Antioxidantien werden beispielsweise phenolische oder bisphenolische Verbindungen, vorzugsweise Thioamid- oder Thioharnstoff-Derivate eingesetzt. Solche Antioxidantien sind aber physiologisch nicht ganz unbedenklich, was bei Verwendung der Polymere in pharmazeutischen Zubereitungen problematisch sein kann.

Aus der GB 836,831 ist ein Verfahren zur Stabilisierung von Polyvinylpyrrolidonen gegen Verfärbungen bekannt, bei dem Lösungen der Polymeren mit Schwefeldioxid, schwefliger Säure oder Alkalimetallsulfiten behandelt werden. Es hat sich allerdings gezeigt, dass bei diesem Verfahren nach Lagerung der Peroxid-Aufbau sogar in stärkerem Maße auftritt als bei unbehandelten Polymeren.

In der EP-B 1083 884 ist ein Verfahren zur Stabilisierung von Polyvinylpyrrolidonen gegen Peroxid-Bildung beschreiben, bei dem wässrigen Lösungen der Polymeren mit sehr geringen Mengen von Schwermetallen oder mit Peroxide spaltenden Enzymen versetzt werden. Der Einsatz von Schwermetallen ist jedoch wegen möglicher Akkumulierung der Schwermetalle im Körper von Nachteil. Der Einsatz von Enzymen ist vor allem aus Kosten und Stabilitätsgründen nachteilig.

Aufgabe der vorliegenden Erfindung war es, ein verbessertes Verfahren zur Stabilisierung von Polyvinylpyrrolidonen gegen Peroxid-Bildung zu finden, welches die geschilderten Nachteile vermeiden hilft.

Demgemäß wurde ein Verfahren zur Herstellung von gegen Peroxid-Bildung stabilisierten Polyvinylpyrrolidonen gefunden, welches dadurch gekennzeichnet ist, dass die Polyvinylpyrrolidone zunächst mit Schwefeldioxid, schwefliger Säure oder deren Alkalimetallsalzen und anschliessend mit einem Radikalfänger behandelt werden.

Polyvinylpyrrolidone sind erfindungsgemäß die Homo- und Copolymere des N-Vinylpyrrolidons, insbesondere die wasserlöslichen Polyvinylpyrrolidone. Ebenso eignet sich das Verfahren auch für quervernetztes, nicht wasserlösliches Polyvinylpyrrolidon (Crospovidon).

Geeignete Copolymere weisen vorzugsweise einen Vinylpyrrolidon-Anteil von mindestens 20 Gew.-% auf. Als Comonomere kommen alle mit N-Vinylpyrrolidon radikalisch copolymerisierbaren Monomere in Betracht.

Die Zahl der Comonomere in einem Polymer ist an sich nicht begrenzt. Üblicherweise liegt sie jedoch unter 5.

Geeignete Monomere sind beispielsweise N,N-Dimethylaminomethyl(meth)acrylat, N,N-Diethylaminomethyl(meth)acrylat, N,N-Dimethylaminoethyl(meth)acrylat, N,N-Diethylaminoethyl-(meth)acrylat, N-[3-(dimethylamino)propyl]methacrylamid und N-[3-(dimethylamino)propyl]acrylamid.

Ebenfalls verwendbare Monomere sind substituierte Acrylsäuren sowie Salze, Ester und Amide davon, wobei die Substituenten an den Kohlenstoffatomen in der zwei oder drei Position der Acrylsäure stehen, und unabhängig voneinander ausgewählt sind aus der Gruppe bestehend aus C₁-C₄ Alkyl, -CN, COOH besonders bevorzugt Methacrylsäure, Ethacrylsäure und 3-Cyanoacrylsäure. Diese Salze, Ester und Amide dieser substituierten Acrylsäuren können wie oben für die Salze, Ester und Amide der Acrylsäure beschrieben ausgewählt werden.

Andere geeignete Monomere sind Alkylester von C₁-C₄₀ linearen, C₃-C₄₀ verzweigtkettigen oder C₃-C₄₀ carbocyclische Carbonsäuren, Vinyl- oder Allylhalogenide, bevorzugt Vinylchlorid und Allylchlorid, Vinylether, bevorzugt Methyl-, Ethyl-, Butyl- oder Dodecylvinylether, Vinylformamid, Vinylmethylacetamid, Vinylamin; Vinyllactame, bevorzugt Vinylpyrrolidon und Vinylcaprolactam, Vinyl- oder Allyl-substituierte heterocyclische Verbindungen, bevorzugt Vinylpyridin, Vinyloxazolin und Allylpyridin.

Weiterhin sind N-Vinylimidazole geeignet, worin R⁹ bis R¹¹ unabhängig voneinander für Wasserstoff, C₁-C₄-Alkyl oder Phenyl steht:

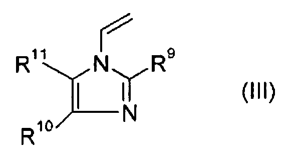

Weitere geeignete Monomere sind Diallylamine der allgemeinen Formel 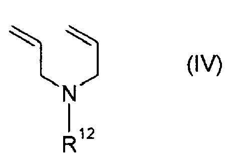 mit
R¹² = C₁- bis C₂₄-Alkyl.

Weitere geeignete Monomere sind Vinylidenchlorid; und Kohlenwasserstoffe mit mindestens einer Kohlenstoff-Kohlenstoff Doppelbindung, bevorzugt Styrol, alpha-Methylstyrol, tert.-Butylstyrol, Butadien, Isopren, Cyclohexadien, Ethylen, Propylen, 1-Buten, 2-Buten, Isobutylen, Vinyltoluol, sowie Mischungen dieser Monomere.

Besonders geeignete Monomere sind Acrylsäure, Methacrylsäure, Ethylacrylsäure, Methylacrylat, Ethylacrylat, Propylacrylat, n-Butylacrylat, iso-Butylacrylat, t-Butylacrylat, 2-Ethylhexylacrylat, Decylacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butyl-ethacrylat, 2-Ethylhexylethacrylat, Decylethacrylat, Stearyl(meth)acrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate, Glycerylmonoacrylat, Glycerylmonomethacrylat, Polyalkylenglykol(meth)acrylate, ungesättigte Sulfonsäuren wie zum Beispiel Acrylamidopropansulfonsäure;

Acrylamid, Methacrylamid, Ethacrylamid, N-Methylacrylamid, N,N-Dimethylacrylamid, N-Ethylacrylamid, N-Isopropylacrylamid, N-Butylacrylamid, N-t-Butylacrylamid, N-Octylacrylamid, N-t-Octylacrylamid, N-Octadecylacrylamid, N-Phenylacrylamid, N-Methylmethacrylamid, N-Ethylmethacrylamid, N-Isopropylmethacrylamid, N-Dodecylmethacrylamid, 1-Vinylimidazol, 1-Vinyl-2-methylvinylimidazol, N,N-Dimethylaminomethyl(meth)acrylat, N,N-Diethylaminomethyl(meth)-acrylat, N,N-Dimethylaminoethyl(meth)acrylat, N,N-Diethylaminoethyl(meth)acrylat, N,N-Dimethylaminobutyl(meth)- acrylat, N,N-Diethylaminobutyl(meth)acrylat, N,N-Dimethylaminohexyl(meth)-acrylat, N,N-Dimethylaminooctyl(meth)acrylat, N,N-Dimethylaminododecyl(meth)acrylat, N-[3-(dimethylamino)propyl]methacrylamid, N-[3-(dimethylamino)propyl]acrylamid, N-[3-(dimethylamino)-butyl]methacrylamid, N-[8-(dimethylamino)octyl]methacrylamid, N-[12-(dimethylamino)dodecyl]methacrylamid, N-[3-(diethylamino)-propyl]methacrylamid, N-[3-(diethylamino)propyl]-acrylamid; Besonders bevorzugt ist N-Isopropylmethacrylamid.

Maleinsäure, Fumarsäure, Maleinsäureanhydrid und seine Halbester, Crotonsäure, Itaconsäure, Diallyldimethylammoniumchlorid, Vinylether (zum Beispiel: Methyl-, Ethyl-, Butyl- oder Dodecylvinylether), Vinylformamid, N-Vinyl-N-Methylacetamid, Vinylamin; Methylvinylketon, Maleimid, Vinylpyridin, Vinylimidazol, Vinylfuran, Styrol, Styrolsulfonat, Allylalkohol, und Mischungen daraus. Besonders bevorzugt ist N-Vinyl-N-Methylacetamid.

Von diesen sind besonders bevorzugt Acrylsäure, Methacrylsäure, Maleinsäure, Fumarsäure, Crotonsäure, Maleinsäureanhydrid sowie dessen Halbester, Methylacrylat, Methylmethacrylat, Ethylacrylat, Ethylmethacrylat, n-Butylacrylat, n-Butylmethacrylat, t-Butylacrylat, t-Butylmethacrylat, Isobutylacrylat, Isobutylmethacrylat, 2-Ethylhexylacrylat, Stearylacrylat, Stearylmethacrylat, N-t-Butylacrylamid, N-Octylacrylamid, 2-Hydroxyethylacrylat, Hydroxypropylacrylate, 2-Hydroxyethylmethacrylat, Hydroxypropylmethacrylate, Alkylenglykol(meth)acrylate, Styrol, ungesättigte Sulfonsäuren wie zum Beispiel Acrylamidopropansulfonsäure, Vinylpyrrolidon, Vinylcaprolactam, Vinylether (z.B.: Methyl-, Ethyl-, Butyl- oder Dodecylvinylether), Vinylformamid, N-VinylN-Methylacetamid, Vinylamin, 1-Vinylimidazol, 1-Vinyl-2-methylimidazol, N,N-Dimethylaminomethylmethacrylat und N-[3-(dimethylamino)-propyl]methacrylamid; 3-Methyl-1-vinylimidazoliumchlorid, 3-Methyl-1-vinylimidazoliummethylsulfat, N,N-Dimethylaminoethylmethacrylat, N-Isopropylmethacrylamid, N-[3-(dimethylamino)- propyl]methacrylamid quaternisiert mit Methylchlorid,

VCAp, VI, 1-Vinyl-3-methylimidazolium Chlorid (QVI), VAC, (Meth)acrylamid, Dimethylaminoethyl(meth)acrylat und Dimethylaminoethyl(meth)acrylamid und deren quaternierten Analoga, Diallyldimethylammoniumchlorid, Vinylalkohol (durch Hydrolyse aus Vinylactetat nach Polymerisation), VFA, Vinylamin (durch Hydrolyse aus VFA nach Polymerisation), Dimethylaminopropyl(meth)acrylat, Dimethylaminopropyl(meth)-acrylamid, (Meth)acrylsäure, Vinylpiperidon, N,N-Dimethyl(meth)acrylamid, Tert-Butyl(meth)acrylamid, N-tert-Octyl(meth)acrylamid, Stearyl(meth)acrylamid, Methyl-, Ethyl-, Butyl-, tert-Butyl-(meth)acrylat, 2,3-Dihydroxypropyl(meth)acrylat, N-Isopropylacrylamid, Vinylpropionat, 1-Vinyl-2-Methylimidazol, Styrol, Vinylpyridin, Ester der (Meth)acrylsäure bzw. Ether von Allylalkohol und von Polyethylenoxid bzw. Propylenoxid bzw. Poly(ethylenoxid-co-propylenoxid) mit insgesamt 2 bis 200 EO- bzw. PO-Einheiten bzw. EO-/PO-Einheiten mit Methoxygruppe oder Hydroxy-Gruppe am Kettenende, Maleinsäure, Fumarsäure, Methylvinylether, Hydroxyethyl(meth)acrylat, Hydroxypropyl(meth)acrylat, Vinyllactame, Vinyloxazoline wie Vinyloxazolin, Vinylmethyloxazolin, Vinylethyloxazolin, Acrylamidopropansulfonsäure, Allylalkohol.

Ganz besonders bevorzugt als Comonomere sind N-Vinyllactame wie N-Vinylcaprolactam (VCAp), N-Vinylformamid, ferner N-Vinylimidazol (VI), 1-Vinyl-3-methylimidazolium Chlorid (QVI), Vinylester aliphatischer Carbonsäuren wie Vinylacetat, Vinylpropionat, Vinylbutyrat, Vinyllaurat, Vinylstearat, ferner (Meth)acrylamid, Dimethylaminoethyl-(meth)acrylat und Dimethylaminoethyl(meth)acrylamid und deren quaternierten Analoga, Diallyldimethylammoniumchlorid.

Ganz besonders bevorzugt Copolymere sind demnach Copolymere aus N-Vinylpyrrolidon (VP) mit Vinylacetat mit einem Gewichtsverhältnis VP/VAc von 20:80 bis 80:20, beispielsweise 30:70, 50:50, 60:40, 70:30, mit K-Werten von 10 bis 100, vorzugsweise 20 bis 50 weiterhin Copolymere aus VP und VI, beispielsweise mit einem Gewichtverhältnis VP/VI von 1:1; Copolymere aus VP und VCap, beispielsweise mit einem Gewichtsverhältnis von 1:1, mit K-Werten von 10 bis 100, vorzugsweise 20 bis 60

Weiterhin sind Copolymere aus VP und 1-Vinyl-3-methylimidazoliumchlorid (erhalten durch Quaternierung von 1-Vinylimidazol mit Methylchlorid) mit einem Gewichtsverhältnis von VP/QVI von 20:80 bis 99:1 bevorzugt, wobei die Copolymere Molekulargewichte von 40.000 bis >1.000.000 Dalton aufweisen können

Insbesondere werden erfindungsgemäß auch wässrige Lösungen von NVP-Homopolymeren mit K-Werten von 1 bis 150, vorzugsweise K10 bis K90, beispielsweise K12, K15, K 17, K25, K30, K60, K85, K90, stabilisiert.

Die Herstellung solcher Polyvinylpyrrolidone durch radikalische Polymerisation ist an sich bekannt. Die Polymerisation kann auch in Gegenwart von üblichern Vernetzern erfolgen.

Die Polymerisation kann beispielsweise als Lösungspolymerisation in einem geeigneten Lösungsmittel wie Wasser, Gemischen aus Wasser und organischen Lösungsmitteln, beispielsweise Ethanol-Wasser oder Isopropanol-Wasser-Gemischen oder in rein organischen Lösungsmitteln wie Ethanol oder Isopropanol, erfolgen.

Eine weitere mögliche Polymerisationsmethode ist die Popcornpolymerisation, die zu einem quervernetzten, wasserunlöslichen Polymer führt (Breitenbach et al. IUPAC International Symposium on macromolecular Chemistry, Budapest 1969 (pp.529-544), Haff, Sanner, Straub, Polymer Journal Vol 17, No. 1 pp 143-152 (1985).

Die zu behandelnden Polymerlösungen weisen üblicherweise einen Feststoffgehalt von 5 bis .60 Gew.-%, bevorzugt.10 - 50 Gew.-% auf. Man kann Lösungen wie sie direkt aus der Herstellung der Polymeren erhalten werden verwenden oder aber auch pulverförmige Polymere in Wasser auflösen.

Die Behandlung erfolgt in der Regel im Anschluss an die Polymerisation, vorzugsweise im Lösungsmittel der Polymerisationsreaktion. Besonders bevorzugt ist die Behandlung wässriger Lösungen.

Bei einer Polymerisation in einem organischen Lösungsmittel kann es sich auch empfehlen, zunächst das organische Lösungsmittel zumindest teilweise oder vollständig gegen Wasser auszutauschen und danach die Behandlung durchzuführen.

Sofern es sich um nicht oder wenig wasserlösliche Polymere handelt, kann die Behandlung auch in der wässrigen Dispersion bzw. Suspension erfolgen.

Erfindungsgemäß werden die Polyvinylpyrrolidone unter Rühren in Lösung oder Dispersion mit Schwefeldioxid, schwefliger Säure oder Alkali- oder Erdalkalimetallsulfiten behandelt. Als Alkalimetallsulfit wird beispielsweise Kaliumsulfit, Kaliumhydrogensulfit, Lithiumsulfit, Lithiumhydrogensulfitoder vorzugsweise Natriumsulfit oder Natriumhydrogensulfit verwendet. Die schweflige Säure oder die Sulfite bzw. Hydrogensulfite werden in Mengen von .0,005 bis 1 Gew.-%, bezogen auf die Menge an Polyvinylpyrrolidonen , vorzugsweise .0,01 bis 0,5 Gew.-% und besonders bevorzugt 0,03 bis 0,20 % verwendet. Die entsprechende Konzentration an schwefliger Säure kann direkt durch Einleiten einer entsprechenden Menge Schwefeldioxid in die wässrige Polymerlösung oder die wässrige Dispersion erhalten werden. Behandelt man Polymerlösungen in organischen Lösungsmitteln, so können ebenfalls die oben genannten Stoffe zugesetzt werden. Die bevorzugte pH-Bereich für die Behandlung mit den oben genannten Peroxidzersetzern liegt bei 3-11, vorzugsweise 6-10, besonders bevorzugt 7-9.

Erfindungsgemäß werden die Polymeren weiterhin mit einem Radikalfänger behandelt. Der Radikalfänger kann in Mengen von 0.01 bis 1 Gew.-%, bezogen auf das Polymer, vorzugsweise 0.03 bis 0.5 Gew.-%, besonders bevorzugt 0,05 bis 0,25 Gew.-% eingesetzt werden.

Als Radikalfänger kommen in Betracht: Ascorbinsäure, Nordihydroguajaretsäure, Ethoxyquin, Bisabolol, Asorbylpalmitat, BHT ("Butylhydroxytoluol": 2,6-Di-tertärbutyl-4-methyl-phenol).

Bevorzugt wird als Radikalfänger Ascorbinsäure eingesetzt. Es ist auch möglich Ammonium, Alkali-, Erdalkali-Salze der Ascorbinsäure wie beispielsweise Ammoniumascorbat, Natriumascorbat oder Magnesiumascorbat zu verwenden. Weiterhin eignen sich Ester von Ascorbinsäure mit anorganischen oder organischen Säuren wie Ascorbylcarbonat, Ascorbylphosphat, Ascorbylsulfat, Ascorbylstearat oder Ascorbylpalmitat, sowie deren Ammonium, Alkali-, Erdalkali-Salze beispielsweise Natriumascorbylphosphat oder Natriumascorbylpalmitat.

Das erfindungsgemäße Verfahren wird so durchgeführt, dass im Anschluss an die Polymerisation der Polymerisationslösung bei erhöhten Temperaturen Schwefeldioxid oder schweflige Säure beziehungsweise deren Salze zugesetzt werden. Diese Behandlung kann bei 10 bis 100°C, vorzugsweise bei 40 bis 90°C erfolgen. Die Dauer der Behandlung richtet sich nach der zu behandelnden Menge. Die Behandlungsdauer kann im Bereich von 1 min bis zu 4 Stunden liegen, bevorzugt 10 min bis 1 Stunde.

Anschliessend wird die Lösung oder Dispersion mit der Ascorbinsäure behandelt. Diese Behandlung erfolgt bei Temperaturen von 0 bis 100°C, vorzugsweise 15 bis 80°C besonders bevorzugt 20 bis 60°C.

Die Behandlung erfolgt vorzugsweise unter Rühren. Üblicherweise wird die Behandlung bei Atmosphärendruck durchgeführt, es kann sich aber auch empfehlen bei einem Überdruck bis zu 1,6 MPa zu arbeiten..

Der bevorzugte pH-Bereich für diese zweite Behandlung mit den Radikalfängern liegt bei 3-10, bevorzugt 4-9.

Die so behandelten Polymerlösungen oder Dispersionen werden anschliessend durch Trocknung in rieselfähige Polymerpulver überführt. Die Trocknung kann beispielsweise durch Sprühtrocknung, Walzentrocknung oder eine andere Warmlufttrocknung erfolgen. Sprühtrocknung und Walzentrocknung sind bevorzugte Trocknungsverfahren.

Die pulverförmigen Polymere werden üblicherweise direkt nach der Trocknung in geeignete Verpackungsmaterialien abgefüllt. Prinzipiell können alle Verpackungsmaterialien eingesetzt werden, die für Pharma- Lebensmittel- oder Kosmetikanwendungen zulässig sind. Vorteilhaft sind natürlich für Sauerstoff wenig oder gar nicht permeable Materialien. Überraschenderweise hat sich jedoch gezeigt, dass eine hervorragende Stabilisierung auch erreicht werden kann, wenn die Verpackungsmaterialien sauerstoffdurchlässig sind und das Polyvinylpyrrolidon sich in einer Atmosphäre mit hohem Sauerstoffgehalt befindet. Dies zeigt in besonderem Maße die Schutzfunktion der erfindungsgemäßen Stabilisierung.

Zusätzlich kann natürlich die Verpackung auch unter Stickstoff- oder Edelgasbegasung erfolgen.

Überraschenderweise wird durch das erfindungsgemäße Verfahren eine deutlich verbesserte Langzeitstabilisierung gegen Peroxid-Aufbau erreicht. Vor allem die Stabilität bei Temperaturbelastung und die Stabilität in sauerstoffhaltigem Medium wird deutlich verbessert.

Vorteilhaft ist auch, dass diese Stabilisierung erreicht werden kann, ohne dass im Polymerpulver durch die Behandlung außer der physiologisch ausgezeichnet verträglichen Ascorbinsäure weitere Rückstände auftreten. Unerwarteterweise findet sich im Polymerpulver keine schweflige Säure oder ein Salz davon und nach wenigen Monaten auch keine Ascorbinsäure, dennoch ist weiterhin eine starke Stabilisierung gegen Peroxide gegeben.

Die so stabilisierten Polyvinylpyrrolidone eignen sich daher besonders vorteilhaft zum Einsatz in pharmazeutischen oder kosmetischen Zubereitungen oder für den Einsatz in der Nahrungs- und Genussmitteltechnologie. Allergische Reaktionen oder sonstige Unverträglichkeiten wie sie durch andere Antioxidantien, Schwermetalle oder Enzyme auftreten können, werden völlig vermieden.

### Beispiele

Die Bestimmung des Peroxid-Gehalts erfolgte bei allen Proben durch die iodometrische Methode. Die Zahlenangaben beziehen sich auf die ppm-Werte (mg Peroxid / kg Polymer), berechnet als Wasserstoffperoxid.

### Beispiel 1

Eine 20 %ige wässrige Lösung von Polyvinylpyrrolidon mit einem K-Wert von 30 (gemessen in einer 1 Gew.-%igen wässrigen Lösung) wurde bei 80°C mit 0,1 Gew.-% Schwefeldioxid bezogen auf Polymer (in Form einer 6 %Lösung von SO₂ in Wasser) versetzt und die Lösung eine Stunde gerührt. Anschliessend wurde die Lösung auf 40°C abgekühlt und mit 0,1 Gew.-% Ascorbinsäure bezogen auf Polymer versetzt. Die so behandelte Lösung wurde sprühgetrocknet. Das pulverförmige Polyvinylpyrrolidon wurde anschliessend in Säcke aus Aluminiumverbundfolie eingeschweisst, wobei vor der Verschweissung der gefüllte Sack zweimal mit Stickstoff geflutet wurde und unter verschiedenen Bedingungen gelagert. Weiterhin wurden auch Proben unter Luft eingeschweisst und anschliessend bei 25°C gelagert. Der Peroxid-Gehalt wurde direkt nach Behandlung sowie nach drei und sechs Monaten Lagerung bestimmt. Die Ergebnisse sind in der nachstehenden Tabelle 1 aufgelistet.

### Beispiel 1 a

Eine 20 %ige wässrige Lösung von Polyvinylpyrrolidon mit einem K-Wert von 30 (gemessen in einer 1 Gew.-%igen wässrigen Lösung) wurde bei 80°C mit 0,2 Gew.-% Na₂SO₃ bezogen auf Polymer, versetzt und die Lösung eine Stunde gerührt. Anschließend wurde die Lösung auf 40°C abgekühlt und mit 0,1 Gew.-% Ascorbinsäure, bezogen auf Polymer, versetzt. Die so behandelte Lösung wurde sprühgetrocknet. Das pulverförmige Polyvinylpyrrolidon wurde anschließend in Säcke aus Aluminiumverbundfolie eingeschweißt, wobei vor der Verschweißung der gefüllt Sack zweimal mit Stickstoff geflutet wurde und unter verschiedenen Bedingungen gelagert. Weiterhin wurden auch Proben unter Luft eingeschweißt und anschließend bei 25°C gelagert. Der Peroxid-Gehalt wurde direkt nach Behandlung sowie nach drei und sechs Monaten Lagerung bestimmt. Die Ergebnisse sind in der nachstehenden Tabelle aufgelistet.

**Tabelle 1**

| Beispiel 1 | Abfüllung unter Luft; Lagerung bei 25 °C | Abfüllung unter Stickstoff; Lagerung bei 25°C/ 60% RF | Abfüllung unter Stickstoff; Lagerung bei 40°C/ 75% RF |
|---|---|---|---|
| Nullwert | <1 | <1 | <1 |
| 3 Monate | 51 | 9 | 17 |
| 6 Monate | 46 | 43 | 39 |

| Beispiel 1a | Abfüllung unter Luft; Lagerung bei 25 °C | Abfüllung unter Stickstoff; Lagerung bei 25°C/ 60% RF | Abfüllung unter Stickstoff; Lagerung bei 40°C/ 75% RF |
|---|---|---|---|
| Nullwert | <1 | <1 | <1 |
| 3 Monate | <1 | <10 | <10 |
| 6 Monate | <1 | <20 | <20 |

### Beispiel 2 (zum Vergleich)

Die Polymerlösung wurde nach der Polymerisation noch eine Stunde bei 80 °C gerührt, ohne dass ein Stabilisierungsmittel zugesetzt wurde und dann sprühgetrocknet (unbehandelte Probe).

### Beispiel 3 (zum Vergleich)

Behandlung nur mit Schwefeldioxid

Die Polymerlösung wurde analog Beispiel 1 mit Schwefeldioxid behandelt und dann sprühgetrocknet.

### Beispiel 4 (zum Vergleich)

Behandlung nur mit Ascorbinsäure

Die Polymerlösung wurde analog Beispiel 1 behandelt, allerdings ohne Zusatz von Schwefeldioxid.

### Beispiel 5

Behandlung mit Schwefeldioxid und anderen weiteren Radikalfängern

Die Polymerlösung wurde analog Beispiel 1 behandelt, wobei statt Ascorbinsäure 0.1 Gew.-% anderer Radikalfänger zugesetzt wurden.
5a) Nordihydroguajaretsäure
5b) Ethoxyquin
5c) Ascorbylpalmitat
5 d) BHT
5e) Tocopherol
5f) Bisabolol

Die Pulver gemäß den Beispielen 2 bis 5 wurden analog Beispiel 1 verpackt und auf ihren Peroxid-Gehalt untersucht. Die Ergebnisse sind in der nachstehenden Tabelle 2 aufgeführt.

**Tabelle 2**

| Beispiel Nr. Lagerung | Verpackung unter Luft; Lagerung bei 25°C | Verpackung unter Stickstoff; Lagerung bei 25°C/60% RF | Verpackung unter Stickstoff; Lagerung bei 40°C/75% RF |
|---|---|---|---|
| 2) | | | |
| Nullwert | 57 | 37 | 37 |
| 3 Monate | 149 | 40 | 162 |
| 6 Monate | 346 | 184 | 406 |
| 3) | | | |
| Nullwert | <1 | <1 | <1 |
| 3 Monate | 339 | 383 | 390 |
| 6 Monate | 458 | 459 | 354 |
| 4) | | | |
| Nullwert | 95 | 95 | 95 |
| 3 Monate | 75 | 81 | 96 |
| 6 Monate | 86 | 85 | 105 |
| 5a) | | | |
| Nullwert | <1 | <1 | <1 |
| 3 Monate | 104 | 6 | 57 |
| 6 Monate | 259 | 32 | 166 |
| 5b) | | | |
| Nullwert | <1 | <1 | <1 |
| 3 Monate | 101 | 94 | 95 |
| 6 Monate | 256 | 95 | 210 |
| 5c) | | | |
| Nullwert | <1 | <1 | <1 |
| 3 Monate | 150 | 120 | 186 |
| 6 Monate | 287 | 250 | 350 |
| 5d) | | | |
| Nullwert | <1 | <1 | <1 |
| 3 Monate | 125 | 100 | 170 |
| 6 Monate | 189 | 140 | 237 |
| 5e) | | | |
| Nullwert | <1 | <1 | <1 |
| 3 Monate | 110 | 65 | 150 |
| 6 Monate | 192 | 159 | 235 |
| 5f) | | | |
| Nullwert | <1 | <1 | <1 |
| 3Monate | 105 | 100 | 112 |
| 6 Monate | 264 | 131 | 188 |
| 6) | | | |
| Nullwert | <2 | <2 | <2 |
| 3 Monate | 3 | 5 | 7 |
| 6 Monate | 5 | 7 | 8 |
| 6a) | | | |
| Nullwert | 11 | 11 | 11 |
| 3 Monate | 20 | 15 | 30 |
| 6 Monate | 32 | 21 | 45 |
| 7) | | | |
| Nullwert | <2 | <2 | <2 |
| 3 Monate | 12 | 15 | 20 |
| 6 Monate | 20 | 21 | 30 |
| 7a) | | | |
| Nullwert | 39 | 39 | 39 |
| 3 Monate | 120 | 100 | 150 |
| 6 Monate | 300 | 280 | 360 |
| 8) | | | |
| Nullwert | <2 | 2 | <2 |
| 3 Monate | 25 | 23 | 25 |
| 6 Monate | 40 | 34 | 43 |
| 8a) | | | |
| Nullwert | 20 | 20 | 20 |
| 3 Monate | 130 | 35 | 150 |
| 6 Monate | 350 | 180 | 400 |
| 9) | | | |
| Nullwert | <2 | <2 | <2 |
| 3Monate | 12 | 10 | 29 |
| 6 Monate | 20 | 18 | 51 |
| 9a) | | | |
| Nullwert | 32 | 32 | 32 |
| 3Monate | 158 | 89 | 165 |
| 6 Monate | 385 | 199 | 476 |

### Beispiel 6

Eine 20 % wässrige Lösung von einem Vinylpyrrolidon-Vinylacetate-(6:4)-Copolymer mit einem K-Wert von 27 (gemessen in einer 1 Gew.-%igen wässrigen Lösung) wurde bei 80°C mit 0,1 Gew.-% Schwefeldioxid (bezogen auf Polymer; eingesetzt in Form einer 6 %Lösung von SO₂ in Wasser) versetzt und die Lösung eine Stunde gerührt. Anschliessend wurde die Lösung auf 40°C abgekühlt und mit 0,1 Gew.-% Ascorbinsäure (bezogen auf Polymer) versetzt. Die so behandelte Lösung wurde sprühgetrocknet. Das pulverförmige Copolymer wurde anschliessend in Säcke aus Aluminiumverbundfolie eingeschweisst, wobei vor der Verschweissung der gefüllte Sack zweimal mit Stickstoff geflutet wurde und unter verschiedenen Bedingungen gelagert. Weiterhin wurden auch Proben unter Luft eingeschweisst und anschliessend bei 25°C gelagert. Der Peroxid-Gehalt wurde direkt nach Behandlung sowie nach drei und sechs Monaten Lagerung bestimmt. Die Ergebnisse sind in der Tabelle 2 aufgelistet.

### Beispiel 6a

Analog Beispiel 6 allerdings ohne Zugabe von SO2 und Ascorbinsäure.

### Beispiel 7

Eine 20 % wässrige Lösung von Polyviylpyrrolidon-Homopolymer mit einem K-Wert von 12 (gemessen in einer 5 Gew.-%igen wässrigen Lösung) wurde bei 80°C mit 0,1 Gew.-% Schwefeldioxid (bezogen auf Polymer; eingesetzt in Form einer 6 %Lösung von SO₂ in Wasser) versetzt und die Lösung eine Stunde gerührt. Anschliessend wurde die Lösung auf 40°C abgekühlt und mit 0,1 Gew.-% Ascorbinsäure (bezogen auf Polymer) versetzt. Die so behandelte Lösung wurde sprühgetrocknet. Das pulverförmige Polyvinylpyrrolidon wurde anschliessend in Säcke aus Aluminiumverbundfolie eingeschweisst, wobei vor der Verschweissung der gefüllte Sack zweimal mit Stickstoff geflutet wurde und unter verschiedenen Bedingungen gelagert. Weiterhin wurden auch Proben unter Luft eingeschweisst und anschliessend bei 25°C gelagert. Der Peroxid-Gehalt wurde direkt nach Behandlung sowie nach drei und sechs Monaten Lagerung bestimmt. Die Ergebnisse sind in der nachstehenden Tabelle 1 aufgelistet.

### Biespiel 7a

Analog Beispiel 7 allerdings ohne Zugabe von SO2 und Ascorbinsäure.

### Beispiel 8

Eine 20% wässrige Lösung von Polyviylpyrrolidon-Homopolymer mit einem K-Wert von 90 (gemessen in einer 1 Gew.-%igen wässrigen Lösung) wurde bei 80°C mit 0,1 Gew.-% Schwefeldioxid (bezogen auf Polymer; eingesetzt in Form einer 6 %Lösung von SO₂ in Wasser) versetzt und die Lösung eine Stunde gerührt. Anschliessend wurde die Lösung auf 40°C abgekühlt und mit 0,1 Gew.-% Ascorbinsäure (bezogen auf Polymer) versetzt. Die so behandelte Lösung wurde auf einem Walzentrockner getrocknet. Das pulverförmige Polyvinylpyrrolidon wurde anschliessend in Säcke aus Aluminiumverbundfolie eingeschweisst, wobei vor der Verschweissung der gefüllte Sack zweimal mit Stickstoff geflutet wurde und unter verschiedenen Bedingungen gelagert. Weiterhin wurden auch Proben unter Luft eingeschweisst und anschliessend bei 25°C gelagert. Der Peroxid-Gehalt wurde direkt nach Behandlung sowie nach drei und sechs Monaten Lagerung bestimmt. Die Ergebnisse sind in der nachstehenden Tabelle 1 aufgelistet.

### Beispiel 8a

Analog Beispiel 8 allerdings ohne Zugabe von SO2 und Ascorbinsäure.

### Beispiel 9

### Quervernetztes Polyvinylpyrrolidon (PVPP; PVP-Popcorn-Polymer)

Eine 15 % wässrige Suspension von quervernetztem Polyvinylpyrrolidon wurde bei 80°C mit 0,1 Gew.-% Schwefeldioxid (bezogen auf festes Polymer PVPP; in Form einer 6 %igen Lösung in Wasser) versetzt und die Lösung wurden eine Stunde gerührt. Anschliessend wurde die Suspension filtriert und gewaschen. Dann wurde das PVPP mit 0,1 Gew.-% Ascorbinsäure (bezogen auf Polymer) versetzt und das Polymer anschliessend getrocknet. Das PVPP-Pulver wurde anschliessend in Säcke aus Aluminiumverbundfolie eingeschweisst, wobei vor der Verschweissung der gefüllte Sack zweimal mit Stickstoff geflutet wurde, und unter verschiedenen Bedingungen gelagert. Weiterhin wurden auch Proben unter Luft eingeschweisst und anschliessend bei 25°C gelagert. Der Peroxid-Gehalt wurde direkt nach Behandlung sowie nach drei und sechs Monaten Lagerung bestimmt. Die Ergebnisse sind in der nachstehenden Tabelle 1 aufgelistet.

### Beispiel 9a

Analog Beispiel 9 allerdings ohne Zugabe von SO2 und Ascorbinsäure.

### Beispiel 10

### Betacarotin-Tablette

100,0 g Betacarotin Trockenpulver 10 % wurden mit 1000,0 g Calciumhydrogenphosphat und 1110,0 g mikrokristalliner Cellulose in einem Turbulamischer gemischt. Diese Mischung wurde anschließend in einem Diosnagranulator mit 600,0 g 25 %iger wässriger Polyvinylpyrrolidon K-Wert 30-Lösung, unter Verwendung von Polyvinylpyrrolidon gemäß Beispiel 1, befeuchtet und die feuchte Masse durch ein 0,8 mm Sieb gegeben. Die Trocknung erfolgte auf einer Horde bei 30°C. Anschließend wurde das trockene Granulat nochmals durch ein 0,8 mm Sieb gesiebt, 15,0 g Magnesiumstearat, 25,0 g hochdisperse Kieselsäure und 100,0 g quervernetztes Polyvinylpyrrolidon hergestellt nach Beispiel 9 untergemischt und die Mischung auf einer Rundläufertablettenpresse bei 10 kN zu Tabletten mit einem Durchmesser von 8 mm und einem Gewicht von 250mg verpresst.

Die Tabletten wurden in Glasgefäßen bei 30°C 6 Monate gelagert und der Gehalt an Betacarotin bestimmt.

| | |
|---|---|
| Anfangswert: 99,6 % Betacarotin | 6 Monatswert: 99,1 % Betacarotin |

Als Vergleich wurden die handelsüblichen Produkte Polyvinylpyrrolidon K 30 (Peroxidgehalt: 320ppm) und Crospovidon (Peroxidgehalt: 250ppm) in der gleichen Rezeptur eingesetzt.

| | |
|---|---|
| Anfangswert: 98,1 % Betacarotin | 6 Monatswert: 95,3 % Betacarotin |

Die Ergebnisse zeigen eine deutliche Stabilisierung des Betacarotins sowohl direkt nach der Herstellung als auch bei Lagerung, wenn erfindungsgemäße Polyvinylpyrrolidone verwendet werden.

### Beispiel 11

### Levonorgestrel Tablette

7,5 g Levonorgestrel wurden in 500,0 g 20 %iger ethanolischer Polyvinylpyrrolidon K-Wert 30-Lösung, unter Verwendung von Polyvinylpyrrolidon gemäß Beispiel 1, gelöst und mit dieser Lösung wurde eine Mischung aus 1100,0 g Calciumhydrogenphosphat und 1152,5 g mikrokristalliner Cellulose in einem Diosnagranulator mit befeuchtet und die feuchte Masse durch ein 0,8 mm Sieb gegeben. Die Trocknung erfolgte auf einer Horde bei 35°C. Anschließend wurde das trockene Granulat nochmals durch ein 0,8mm Sieb gesiebt, 15,0g Magnesiumstearat, 25,0 g hochdisperse Kieselsäure und 100,0 g quervernetztes Polyvinylpyrrolidon hergestellt nach Beispiel 9 untergemischt und die Mischung auf einer Rundläufertablettenpresse bei 15 kN zu Tabletten mit einem Durchmesser von 8 mm und einem Gewicht von 250 mg verpresst.

Die Tabletten wurden in Glasgefäßen bei 30°C 6 Monate gelagert und der Gehalt an Levonorgestrel bestimmt.

| | |
|---|---|
| Anfangswert: 99,5 % Levonorgestrel | 6 Monatswert: 99,2 % Levonorgestrel |

Als Vergleich wurden die handelsüblichen Produkte Polyvinylpyrrolidon K 30 (Peroxidgehalt: 320ppm) und Crospovidon (Peroxidgehalt: 250ppm) in der gleichen Rezeptur eingesetzt.

| | |
|---|---|
| Anfangswert: 98,5 % Levonorgestrel | 6 Monatswert: 96,3 % Levonorgestrel |

Die Ergebnisse zeigen eine deutliche Stabilisierung des Levonorgestrels sowohl direkt nach der Herstellung als auch bei Lagerung, wenn erfindungsgemäße Polyvinylpyrrolidone verwendet werden.

### Beispiel 12

### Adrenalin Injektionslösung

1,2 g Adrenalin-HCl, 10,0 g Polyvinylpyrrolidon K 12 hergestellt nach Beispiel 7 und 7,5 g Natriumchlorid wurden in 998,0 g ausgekochtem und unter Stickstoff abgekühltem Wasser für Injektionszwecke gelöst. Die Lösung wurde durch einen 0,22 µm-Filter sterilfiltriert und unter Stickstoffbegasung in 1 ml Ampullen abgefüllt.

Die Ampullen wurden in bei 25°C 3 Monate gelagert und der Gehalt an Adrenalin bestimmt.

| | |
|---|---|
| Anfangswert: 98,5 % Adrenalin | 3 Monatswert: 96,9 % Adrenalin |

Als Vergleich wurden das handelsübliche Produkt Polyvinylpyrrolidon K 12 (Peroxidgehalt: 290ppm) in der gleichen Rezeptur eingesetzt.

| | |
|---|---|
| Anfangswert: 96,4 % Adrenalin | 3 Monatswert: 89,3 % Adrenalin |

Die Ergebnisse zeigen eine deutliche Stabilisierung des Adrenalins sowohl direkt nach der Herstellung als auch bei Lagerung, wenn erfindungsgemäßes Polyvinylpyrrolidon verwendet werden.

### Beispiel 13

### Promethazin Lösung

22,6 g Promethazin-HCl, 25,0 g Polyvinylpyrrolidon K 90 hergestellt nach Beispiel 8, 5,0 g Citronensäure, 2,0 g Sorbinsäure und 60,0 g Saccharose wurden in 975,0 g demineralisiertem Wasser bei 50°C gelöst, die Lösung abgekühlt auf Raumtemperatur und in 50ml Braunglasflaschen abgefüllt.

Die Flaschen wurden in bei 30°C 9 Monate gelagert und der Gehalt an Promethazin bestimmt.

| | |
|---|---|
| Anfangswert: 99,8 % Promethazin | 9 Monatswert: 99,5 % Promethazin |

Als Vergleich wurden das handelsübliche Produkt Polyvinylpyrrolidon K 90 (Peroxidgehalt: 360 ppm) in der gleichen Rezeptur eingesetzt.

| | |
|---|---|
| Anfangswert: 98,4 % Promethazin | 9 Monatswert: 95,3 % Promethazin |

Die Ergebnisse zeigen eine deutliche Stabilisierung des Promethazins sowohl direkt nach der Herstellung als auch bei Lagerung, wenn erfindungsgemäßes Polyvinylpyrrolidon verwendet werden.

### Beispiel 14

### Filmstrip mit Terbutalinsulfat

100,0 g Vinylpyrrolidon-Vinylacetat (6:4) Copolymer hergestellt nach Beispiel 6 und 100,0 g Vinylalkohol-Polyethylenglykol-Pfropfcopolymer (Kollicoat IR, BASF AG) wurden in 800,0 g demineralisiertem Wasser unter Rühren gelöst. Anschließend wurden in dieser Polymerlösung 10,0 g Terbutalinsulfat und 2,0 g Saccharin-Natrium gelöst. Das Ausrakeln zu einem Film erfolgte auf einen Erichsen-Filmziehgerät unter Verwendung eines 500 µm-Rakels. Die Trocknung des Filmes wurde bei 50°C vorgenommen und danach wurde der Film in Stücke von 20 x 20 mm geschnitten und in Kunststoffdosen verpackt.

Die Dosen wurden in bei 30°C 6 Monate gelagert und der Gehalt an Terbutalinsulfat bestimmt.

| | |
|---|---|
| Anfangswert: 99,6 % Terbutalinsulfat | 6 Monatswert: 99,8 % Terbutalinsulfat |

Als Vergleich wurden das handelsübliche Produkt Polyvinylpyrrolidon K 90 (Peroxidgehalt: 360 ppm) in der gleichen Rezeptur eingesetzt.

| | |
|---|---|
| Anfangswert: 98,0 % Terbutalinsulfat | 6 Monatswert: 94,6 % Terbutalinsulfat |

Die Ergebnisse zeigen eine deutliche Stabilisierung des Promethazins sowohl direkt nach der Herstellung als auch bei Lagerung, wenn erfindungsgemäßes Polyvinylpyrrolidon verwendet werden.

### Beispiel 15

### Prednisolon Tablette

100,0 g Prednisolon wurden mit 1100,0 g direkttablettierbarer Lactose und 80,0 g Polyvinylpyrrolidon K30 hergestellt nach Beispiel 1, 60,0 g quervernetztes Polyvinylpyrrolidon hergestellt nach Beispiel 9 und 15,0 g Magnesiumstearat wurden in einem Turbulamischer gemischt. Diese Mischung wurde anschließend auf einer Rundläufertablettenpresse bei 8kN zu Tabletten mit einem Durchmesser von 7mm und einem Gewicht von 135,0 mg verpresst.

## Patentansprüche

1. Verfahren zur Stabilisierung von Polyvinylpyrrolidonen, **dadurch gekennzeichnet, dass** man die Polyvinylpyrrolidone mit Schwefeldioxid, schwefliger Säure oder Alkalimetallsulfiten und anschliessend mit Radikalfänger behandelt.

2. Verfahren nach Anspruch 1, **dadurch gekennzeichnet, dass** man Schwefeldioxid, schwefliger Säure oder Alkalimetallsulfite in Mengen von 0,01 bis 1 Gew.-%, bezogen auf die Mengen an Polyvinylpyrrolidon, einsetzt.

3. Verfahren nach Anspruch 1 oder 2, **dadurch gekennzeichnet, dass** man Radikalfänger in Mengen von 0,01 bis 1 Gew.-%, bezogen auf die Mengen an Polyvinylpyrrolidon, einsetzt.

4. Verfahren nach einem der Ansprüche 1 bis 3, **dadurch gekennzeichnet, dass** als Radikalfänger Ascorbinsäure eingesetzt wird.

5. Verfahren nach einem der Ansprüche 1 bis 4, **dadurch gekennzeichnet, dass** die Behandlung in einer Lösung des Polymeren erfolgt.

6. Verfahren nach Anspruch 5, **dadurch gekennzeichnet, dass** die Behandlung in wässriger Lösung erfolgt.

7. Verfahren nach einem der Ansprüche 1 bis 4, **dadurch gekennzeichnet, dass** die Behandlung in wässriger Suspension erfolgt.

8. Verfahren nach einem der Ansprüche 1 bis 7, **dadurch gekennzeichnet, dass** die Behandlung mit Schwefeldioxid, schwefliger Säure oder Alkalimetallsulfiten bei Temperaturen von 10 bis 100°C erfolgt.

9. Verfahren nach einem der Ansprüche 1 bis 8, **dadurch gekennzeichnet, dass** die Behandlung mit Ascorbinsäure bei Temperaturen von 0 bis 100°C erfolgt.

10. Verfahren nach einem der Ansprüche 1 bis 9, **dadurch gekennzeichnet, dass** es sich bei den behandelten Polyvinylpyrrolidonen um Homo- oder Copolymere des N-Vinylpyrrolidons mit einem Gehalt an Vinylpyrrolidon-anteil von mindestens 5 Gew.-% handelt.

11. Verfahren nach einem der Ansprüche 1 bis 10, **dadurch gekennzeichnet, dass** die so behandelten Lösungen oder Dispersionen durch Trocknung in die pulverförmigen Polyvinylpyrrolidone überführt werden.

12. Verfahren nach einem der Ansprüche 1 bis 11, **dadurch gekennzeichnet, dass** man die Trocknung durch Sprüh- oder Walzentrocknung durchführt.

## Claims

1. A method for stabilizing polyvinylpyrrolidones, which comprises treating the polyvinylpyrrolidones with sulfur dioxide, sulfurous acid or alkali metal sulfites and subsequently with free-radical scavenger.

2. The method according to claim 1, wherein sulfur dioxide, sulfurous acid or alkali metal sulfites are employed in amounts of from 0.01 to 1% by weight based on the amounts of polyvinylpyrrolidone.

3. The method according to claim 1 or 2, wherein free-radical scavenger is employed in amounts of from 0.01 to 1% by weight based on the amounts of polyvinylpyrrolidone.

4. The method according to any of claims 1 to 3, wherein ascorbic acid is employed as free-radical scavenger.

5. The method according to any of claims 1 to 4, wherein the treatment takes place in a solution of the polymer.

6. The method according to claim 5, wherein the treatment takes place in aqueous solution.

7. The method according to any of claims 1 to 4, wherein the treatment takes place in aqueous suspension.

8. The method according to any of claims 1 to 7, wherein the treatment with sulfur dioxide, sulfurous acid or alkali metal sulfites takes place at temperatures of from 10 to 100°C.

9. The method according to any of claims 1 to 8, wherein the treatment with ascorbic acid takes place at temperatures of from 0 to 100°C.

10. The method according to any of claims 1 to 9, wherein the treated polyvinylpyrrolidones are homo- or copolymers of N-vinylpyrrolidone having a content of vinylpyrrolidone fraction of at least 5% by weight.

11. The method according to any of claims 1 to 10, wherein the solutions or dispersions treated in this way are converted into the powdered polyvinylpyrrolidones by drying.

12. The method according to any of claims 1 to 11, wherein the drying is carried out by spray or drum drying.

## Revendications

1. Procédé pour la stabilisation de polyvinylpyrrolidones, **caractérisé en ce qu'**on traite les polyvinylpyrrolidones avec du dioxyde de soufre, de l'acide sulfureux ou des sulfites de métal alcalin, puis avec des pièges de radicaux.

2. Procédé selon la revendication 1, **caractérisé en ce qu'**on utilise le dioxyde de soufre, l'acide sulfureux ou les sulfites de métal alcalin en des quantités de 0,01 à 1% en poids, par rapport aux quantités de polyvinylpyrrolidone.

3. Procédé selon la revendication 1 ou 2, **caractérisé en ce qu'**on utilise les pièges de radicaux en des quantités de 0,01 à 1% en poids, par rapport aux quantités de polyvinylpyrrolidone.

4. Procédé selon l'une quelconque des revendications 1 à 3, **caractérisé en ce qu'**on utilise de l'acide ascorbique comme piège de radicaux.

5. Procédé selon l'une quelconque des revendications 1 à 4, **caractérisé en ce que** le traitement est réalisé dans une solution du polymère.

6. Procédé selon la revendication 5, **caractérisé en ce que** le traitement est réalisé en solution aqueuse.

7. Procédé selon l'une quelconque des revendications 1 à 4, **caractérisé en ce que** le traitement est réalisé en suspension aqueuse.

8. Procédé selon l'une quelconque des revendications 1 à 7, **caractérisé en ce que** le traitement est réalisé avec du dioxyde de soufre, de l'acide sulfureux ou des sulfites de métal alcalin à des températures de 10 à 100°C.

9. Procédé selon l'une quelconque des revendications 1 à 8, **caractérisé en ce que** le traitement est réalisé avec de l'acide ascorbique à des températures de 0 à 100°C.

10. Procédé selon l'une quelconque des revendications 1 à 9, **caractérisé en ce qu'**il s'agit, pour les polyvinylpyrrolidones traitées, d'homopolymères ou de copolymères de la N-vinylpyrrolidone avec une teneur en proportion de vinylpyrrolidone d'au moins 5% en poids.

11. Procédé selon l'une quelconque des revendications 1 à 10, **caractérisé en ce que** les solutions ou dispersions ainsi traitées sont transformées par séchage en polyvinylpyrrolidones sous forme de poudre.

12. Procédé selon l'une quelconque des revendications 1 à 11, **caractérisé en ce qu'**on réalise le séchage par pulvérisation ou sur cylindres.
